# EUROPEAN PATENT SPECIFICATION

(11) **EP 2 595 222 B1**
(45) Date of publication and mention of the grant of the patent: **27.05.2015**
(21) Application number: 12007675.7
(22) Date of filing: 13.11.2012
(51) Int. Cl.: H01M 4/38, H01M 4/62, H01M 10/052, H01M 10/0567, H01M 10/0525

(54) **Non-aqueous electrolyte secondary battery**
Sekundärbatterie mit nicht-wässrigem Elektrolyten
Batterie secondaire à électrolyte non-aqueux

(30) Priority: 15.11.2011 JP 2011249476
(43) Date of publication of application: 22.05.2013
(73) Proprietor: Shin-Etsu Chemical Co., Ltd., Chiyoda-ku Tokyo (JP)
(72) Inventor: Tatsuhiko, Ikeda, Gunma-ken (JP); Miyawaki, Satoru, Gunma-ken (JP)
(74) Representative: Wibbelmann, Jobst

(56) References cited:
- CN-A- 101 478 062
- JP-A- 2008 135 382
- US-A1- 2006 286 458
- US-A1- 2008 226 983
- US-A1- 2009 136 851
- US-A1- 2010 209 772

## Description

### BACKGROUND OF THE INVENTION

### FIELD OF THE INVENTION

The present invention relates to a nonaqueous electrolyte secondary battery that includes, inside a battery cell, a positive electrode, a negative electrode prepared by using a negative electrode paste containing a silicon-based negative electrode active material, and a nonaqueous electrolyte solution.

### DESCRIPTION OF THE RELATED ART

Recently, with a rapid development of mobile equipments and the rise of electric automobiles, for an electric storage device, a requirement for an increase in capacity, a reduction in size and weight, and an improvement in safety is stronger than ever. In particular, a lithium ion secondary battery is, being light and having high voltage and large capacity, broadly used as an electric storage device.

At the present time, as a negative electrode material of a lithium ion secondary battery, a graphite-based material is mainly used. However, since the graphite-based negative electrode material is small in the battery capacity per weight and, as was described above, can not respond to a requirement for an increase in the battery capacity, battery manufacturers, etc. have studied to switch to a negative electrode material different from graphite. Among these, a silicon-based negative electrode active material has a capacity per weight remarkably larger than that of graphite; accordingly, it is gathering attention as a negative electrode material capable of substituting graphite.

As a method by which silicon oxide that is a silicon-based negative electrode active material is used in a negative electrode, patent document 1, for example, is known. Further, as a method where a carbon layer is coated on a surface of silicon oxide particles by chemical vapor deposition method, for example, patent document 2 is known.

However, though the silicon-based negative electrode active material is more advantageous than graphite from the viewpoint of battery capacity, a problem is pointed out that the battery capacity retention rate between before and after high temperature standing (so-called, recovery characteristic) is lower when the silicon-based negative electrode active material is used than when the graphite is used. In particular, since an electric storage device for an automobile is principally used outdoor, it is frequently exposed to high temperature for a long time; accordingly, in the case where the recovery characteristic is not excellent, the electric storage device tends to be rapidly deteriorated.

As a measure for improving the recovery characteristic, a method where a sulfur-containing organic compound or a lactam compound is added to an electrolyte solution has been developed. That is, by adding a 1,3,2-dioxathiolan-2,2-dioxide derivative or a 1,3-propanediol cyclic sulfate derivative (patent document 3), allyl sulfide (patent document 4), or β- to ε-lactam compound (patent document 5), a stable film is formed on a surface of a negative electrode and an electrolyte is suppressed from decomposing when left under high temperature.

### CITATION LIST

### Patent Documents

Patent Document 1: Japanese Patent No. 2997741
Patent Document 2: Japanese Unexamined Patent Publication (Kokai) No. 2002-42806
Patent Document 3: Japanese Unexamined Patent Publication (Kokai) No. 2004-185931
Patent Document 4: Japanese Unexamined Patent Publication (Kokai) No. 2005-310702
Patent Document 5: Japanese Unexamined Patent Publication (Kokai) No. 2010-135330

US 2009/136851 A1 discloses a negative electrode for a rechargeable lithium battery including a non-carbon-based active material such as silicon, a lithium salt having an oxalatoborate structure such as lithium bis(oxalatoborate) (LiBOB), and a high-strength polymer binder.

US 2010/209772 A1, CN 101 478 062 A, US 2008/226983 A1, JP 2008 135382 A and US 2006/286458 A1 describe non-aqueous electrolyte secondary batteries including a positive electrode, a negative electrode having a silicon-based active material and a non-aqueous electrolyte solution comprising LiBOB as electrolyte salt (optionally in admixture with other lithium salts).

### SUMMARY OF THE INVENTION

However, all methods described above are related to a case where a carbon material is used as a negative electrode active material. That is, an improvement in the recovery characteristic of a lithium ion secondary battery that mounts a negative electrode that uses a silicon-based negative electrode active material has been hardly studied.

In particular, in order to extend a cruising distance of an electric automobile, it is indispensable to enhance the energy density of a lithium ion secondary battery for an electric automobile. As a method for this, it is under study to substitute a carbon-based negative electrode active material that is at the present time broadly used as a negative electrode active material with a negative electrode active material higher in the energy density. In particular, a silicon-based negative electrode active material is gathering an attention as a next generation negative electrode material. However, since the recovery characteristic of the silicon-based negative electrode active material is lower than that of the present time carbon-based negative electrode and, at the present time, a technology for solving the problem has not been found, there was a high barrier for using the silicon-based negative electrode active material for a negative electrode material of a lithium ion secondary battery for an electric automobile.

The present invention was carried out to solve the problem and it is an object of the present invention to provide a nonaqueous electrolyte secondary battery of which recovery characteristic between before and after high temperature standing is improved.

In order to solve the problem, the present invention provides a nonaqueous electrolyte secondary battery that includes, inside a battery cell, a positive electrode, a negative electrode prepared by using a negative electrode paste containing a silicon-based negative electrode active material, and a nonaqueous electrolyte solution, in which an ionic compound represented by the following general formula (1) is contained inside a battery cell, 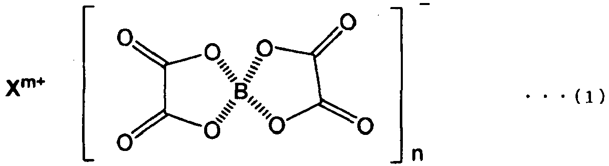 wherein X^{m+} represents an organic cation having N⁺, P⁺ or S⁺, or an alkaline earth metal cation, m represents a valence of the X, and n represents a natural number satisfying n = m.

Thus, when the ionic compound is contained inside a battery cell, a nonaqueous electrolyte secondary battery of which recovery characteristic between before and after high temperature standing is improved is obtained.

Further, the ionic compound is preferably added to a nonaqueous electrolyte solution and/or a negative electrode paste.

Thus, when the ionic compound is added to a nonaqueous electrolyte solution, since a use amount thereof is slight, the recovery characteristic can be improved and the cycle characteristics are not affected. Further, when the ionic compound is added to a negative electrode paste, not only the recovery characteristic are improved but also the wettability between a nonaqueous electrolyte solution and an electrode can be expected to be enhanced. In particular, when a gel electrolyte that is difficult to permeate into an electrode is used, not only the recovery characteristic but also other battery characteristics improvement effect can be expected. Further, when the ionic compound is added to a negative electrode paste, since a drying step is undergone during preparation of a negative electrode, there is also an advantage that the negative electrode is not required to be prepared under an environment where a moisture content is strictly controlled.

Further, it is preferred that the ionic compound is added, to a nonaqueous electrolyte solution, from 0.5 to 20% by mass, and/or, to a negative electrode paste, from 0.05 to 10% by mass with respect to the silicon-based negative electrode active material.

When an addition amount is like this, the advantages such as an improvement in the recovery characteristic, no influence on the cycle characteristics, and an improvement in the wettability between the electrolyte solution and the electrode can be more exerted.

Further, the ionic compound is more preferably coated on a surface of the silicon-based negative electrode active material.

Like this, also when the ionic compound is coated on a surface of the silicon-based negative electrode active material, not only an improvement in the recovery characteristic but also an enhancement effect of the wettability between the nonaqueous electrolyte solution and the electrode can be expected. In particular, when the gel electrolyte that is difficult to permeate into the electrode is used, not only the recovery characteristic but also other battery characteristics enhancement effect can be expected. Further, since a drying step is undergone during preparation of a negative electrode, there is also an advantage that a nonaqueous electrolyte secondary battery is not required to be prepared under an environment where a moisture content is strictly controlled.

As was described above, according to a nonaqueous electrolyte secondary battery of the invention, which contains the ionic compound inside a battery cell, the recovery characteristic between before and after high temperature standing can be improved.

When the ionic compound is added to a nonaqueous electrolyte solution, a slight use amount is enough; accordingly, not only the recovery characteristic is improved, but also the cycle characteristics are not affected. Further, when the ionic compound is added to a negative electrode paste, in particular, when the ionic compound is coated on a surface of the silicon-based negative electrode active material, not only an improvement in the recovery characteristic but also an enhancement effect of the wettability between the nonaqueous electrolyte solution and the electrode can be expected. In this case, when a gel electrolyte that is difficult to permeate into an electrode is used, not only the recovery characteristic but also an enhancement effect of other battery characteristics can be expected.

### DESCRIPTION OF THE PREFERRED EMBODIMENTS

Hereinafter, a nonaqueous electrolyte secondary battery of the invention will be detailed. However, the invention is not restricted thereto. As was described above, a nonaqueous electrolyte secondary battery of which recovery characteristic between before and after high temperature standing are improved has been desired.

The present inventors studied hard to solve the problem and found that, when an ionic compound represented by the following general formula (1) is contained inside a battery cell of a nonaqueous electrolyte secondary battery, the battery capacity can be prevented from deteriorating before and after high temperature standing, that is, the recovery characteristic can be improved, 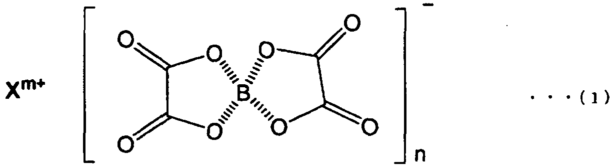 wherein X^{m+} represents an organic cation having N⁺, P⁺ or S⁺, or an alkaline earth metal cation, m represents a valence of the X, and n represents a natural number satisfying n = m. As a method for making the ionic compound contain inside the battery cell, for example, addition to a nonaqueous electrolyte solution of a polar organic solvent and a Li salt, etc., addition to a negative electrode paste, and coating of a surface of a silicon-based negative electrode active material can be cited. The present inventors found that, in addition to be able to improve the recovery characteristic, upon manufacturing a nonaqueous electrolyte secondary battery like this, in particular, a lithium ion secondary battery, the degree of freedom to use the ionic compound is very high, and, an addition quantity of the ionic compound is enough to be slight, and an influence of the ionic compound on the cycle characteristics is slight, and came to complete the present invention.

That is, the present invention provides a nonaqueous electrolyte secondary battery that includes, inside a battery cell, a positive electrode, a negative electrode prepared by using a negative electrode paste containing a silicon-based negative electrode active material, and a nonaqueous electrolyte solution, in which an ionic compound represented by the above general formula (1) is contained inside a battery cell.

Hereinafter, the present invention will be detailed.

### [Silicon-based Negative Electrode Active Material]

In the invention, a silicon-based negative electrode active material is used as a negative electrode active material. The silicon-based negative electrode active material is a generic name for a negative electrode material that makes use of silicon and a silicon compound that react with a lithium ion, etc. during charge/discharge as an active material.

Examples of the silicon-based negative electrode active materials like this include so-called metallurgical grade silicon prepared by reducing silicon dioxide with carbon, industrial grade silicon obtained by reducing impurities of metallurgical grade silicon according to an acid treatment or a unidirectional solidification, high purity silicon different in a crystalline state such as high purity single crystal, polycrystal or amorphous prepared from silane obtained by reacting silicon, and silicon obtained by making industrial grade silicon high purity according to a sputtering method or an EB vapor deposition method and simultaneously by adjusting a crystalline state and a precipitation state.

Further, silicon oxide that is a compound of silicon and oxygen, various kinds of alloys of silicon, and silicon compounds of which crystalline state are adjusted according to a quenching method can be cited. Among these, a silicon-based negative electrode active material having a structure where the outside is covered with a carbon film and silicon nanoparticles are dispersed in silicon oxide is particularly preferred because the expansion/contraction accompanying charge/discharge is suppressed, and also the cycle characteristics are excellent.

### [Negative Electrode Paste]

Further, the negative electrode paste of the invention is not restricted to only single use of the silicon-based negative electrode active material as long as it contains a silicon-based negative electrode active material. In particular, by blending a silicon-based negative electrode active material to a carbon-based negative electrode active material such as graphite, a negative electrode paste containing a hybrid type negative electrode active material can be formed.

### [Ionic Compound]

In the invention, an ionic compound of a combination of a cation represented and a bis(oxalato)borate anion (hereinafter, also referred to as BOB) by the following general formula (1) is contained inside a battery cell of a nonaqueous electrolyte secondary battery, 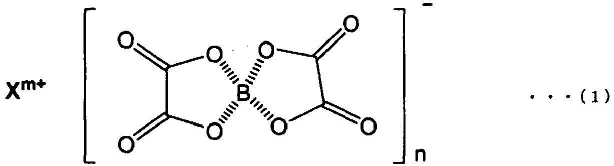 wherein X^{m+} represents an organic cation having N⁺, P⁺ or S⁺, or an alkaline earth metal cation, m represents a valence of the X, and n represents a natural number satisfying n = m. Hereinafter, the ionic compounds will be illustrated.

### <1. Case where X^{m+} is Alkaline Earth Metal Cation>

When X^{m+} of an ionic compound represented by the above general formula (1) is an alkali earth metal cation, the ionic compounds can be handled as a salt the same as, Mg(TFSI)₂. Accordingly, the ionic compounds like this are easy to handle.

### <2. Case where X^{m+} is Organic Cation having N⁺>

As the case where X^{m+} of the ionic compound represented by the general formula (1) is an organic cation having N⁺, specifically, an ammonium cation, a pyrrolidinium cation, a piperidinium cation (the following general formula (2)), an imidazolium cation (the following general formula (3)), and a pyridinium cation (the following general formula (4)) can be cited, without particularly restricting thereto. The general formula (2) is: 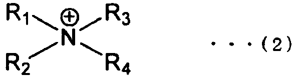 wherein R₁ to R₄ represent alkyl groups or alkoxyalkyl groups the same or different from each other. Further, among two of R₁ to R₄ may have a ring structure sharing the same functional group. When R₁ and R₂ are bonded with a saturated hydrocarbon group having four carbon atoms, it is particularly called as a pyrrolidinium cation, and when R₁ and R₂ are bonded with a saturated hydrocarbon having five carbon atoms, it is particularly called as a piperidinium cation. The general formula (3) is: 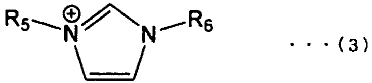 wherein R₅ to R₆ represent alkyl groups or alkoxyalkyl groups the same or different from each other. The general formula (4) is: 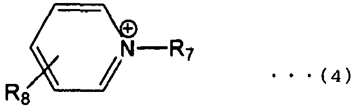 wherein R₇ to R₈ represent alkyl groups or alkoxyalkyl groups the same or different from each other. Further, substitution groups R₈ may be two or more on an aromatic ring.

### <3. Case where X^{m+} is Organic Cation having P⁺>

As the case where X^{m+} of the ionic compound represented by the general formula (1) is an organic cation having P⁺, specifically, a phosphonium cation (represented by the following general formula (5)) can be cited, without particularly restricting thereto, 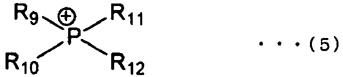 wherein R₉ to R₁₂ represent alkyl groups or alkoxyalkyl groups the same or different from each other; and two of among R₉ to R₁₂ may have a ring structure sharing the same functional group.

### <4. Case where X^{m+} is Organic Cation having S⁺>

As the case where X^{m+} of the ionic compound represented by the general formula (1) is an organic cation having S⁺, specifically, what represents a sulfonium cation (the following general formula (6)) can be cited, without particularly restricting thereto, 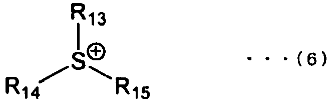 wherein R₁₃ to R₁₅ represent alkyl groups or alkoxyalkyl groups the same or different from each other; and two of among R₁₃ to R₁₅ may have a ring structure sharing the same functional group.

By combining the cation and bis(oxalato)borate anion, as the ionic compound represented by the above general formula (1), various kinds of ionic compounds can be selected. However, a cation component of an ionic compound that can be used in the invention is not restricted to the cations described above.

### [Addition of Ionic Compound inside Battery Cell]

As a mode for containing an ionic compound inside a battery cell, following (a) to (c) or combinations thereof can be cited without particular restriction.
(a) Addition to a nonaqueous electrolyte solution,
(b) addition to a negative electrode paste, and
(c) coating on a surface of a silicon-based negative electrode active material.

### <(a) Addition to Nonaqueous Electrolyte Solution>

The ionic compound can be added during preparation of a nonaqueous electrolyte solution. When the ionic compound is added to prepare a nonaqueous electrolyte solution, it is preferred to conduct an operation under an inert gas atmosphere such as a glove box so that moisture may not be mingled. Also, an ionic compound that contains moisture as low as possible is used.

According to the above-mentioned method, a nonaqueous electrolyte solution that can improve the recovery characteristic can be obtained. An addition amount of the ionic compound to an electrolyte solution is preferable to be an amount that can sufficiently develop an effect of an improvement in the recovery characteristic and does not adversely affect on the cycle characteristics. In particular, in the case of a metal salt with an alkaline earth metal cation, even when it is added much, other than an effect of improving the metal ion conductivity or electroconductivity is not developed, and in many cases, the cycle characteristics are not affected. As an addition amount is, with respect to the nonaqueous electrolyte solution, preferably 0.5 to 20% by mass, more preferably, 1 to 10% by mass.

### <(b) Addition of Negative Electrode Paste>

The ionic compound can be added to a negative electrode paste, and the negative electrode paste can be coated on a current collector and dried to prepare a negative electrode. The ionic compound may be directly added to a negative electrode paste. However, when the dispersibility in the negative electrode paste is considered, it is preferred that the ionic compound is mixed in advance with an organic solvent, and the mixture is added to the negative electrode paste. At this time, an organic solvent that does not separate from the ionic compound is appropriately used. As examples of such organic solvents, NMP (N-methyl-2-pyrrolidone), N,N-dimethylformamide, and N,N-dimethylacetamide are preferably cited. However, when the ionic compound is not compatible with a solvent to be used, a surfactant, etc. can be appropriately added in the range that does not disturb the object of the invention.

After that, the negative electrode paste is coated on a current collector, and, by undergoing a drying step, a negative electrode that can improve the recovery characteristic can be obtained.

As a current collector, as long as it is a material that is usually used as a current collector of a negative electrode such as a copper foil or a nickel foil, it can be used without particular restriction. Further, a coating thickness of the negative electrode paste and a shape and magnitude of a negative electrode can be appropriately selected. The negative electrode paste may be coated on one side of a current collector or may be coated on both sides of the current collector.

When the ionic compound is added to the negative electrode paste, since the ionic compound is present in the proximity of a negative electrode active material, at an addition amount less than that when adding to a nonaqueous electrolyte solution, an effect can be exerted. Preferably, with respect to the silicon-based negative electrode active material, the addition amount is 0.05 to 10% by mass, and more preferably, 0.1 to 1% by mass.

Further, when the ionic compound is added to the negative electrode paste like this addition method, since a drying step is undergone, there is an advantage that a nonaqueous electrolyte secondary battery may not be prepared under an environment where a moisture content is rigorously controlled like the (a).

### <(c) Coating on Surface of Silicon-based Negative Electrode Active Material>

The ionic compound can be coated on a surface of a silicon-based negative electrode active material. A solvent is added to the silicon-based negative electrode active material to prepare a slurry, thereto an ionic compound is added. Alternatively, after an ionic compound is mixed in advance with a solvent, a silicon-based negative electrode active material is added thereto, thereby, a slurry is prepared. Thereafter, the prepared slurry is subjected to reduced pressure drying and the ionic compound is coated on a surface of the silicon-based negative electrode active material.

As a solvent that is used to prepare a slurry, a solvent from which the ionic compound does not separate is appropriately selected. However, when the ionic compound separates from a solvent to be used, a surfactant may be appropriately added in a range that does not disturb the object of the invention.

Further, since a slurry is subjected to reduced-pressure drying, a solvent that has a relatively low boiling temperature and does not so much cause flocculation of the silicon-based negative electrode active material after drying is preferable. Further, it is necessary that an ionic compound can be dissolved. Specifically, organic solvents such as NMP, acetone, methanol, ethanol, isopropyl alcohol, methyl ethyl ketone, acetonitrile, nitrobenzene, and toluene may be used singularly or by mixing so that an ionic compound may be dissolved.

In particular, when considering the lowness of the boiling temperature and flocculation prevention, NMP and isopropyl alcohol are preferably used in combination.

When a negative electrode paste is prepared with the silicon-based negative electrode active material obtained like this, coated on a current collector and dried, a negative electrode that can improve the recovery characteristic can be obtained. That is, since the silicon-based negative electrode active material is contained in the negative electrode paste, when the ionic compound is coated on a surface of the silicon-based negative electrode active material, as a result, the ionic compound is contained in the paste.

When an ionic compound is coated on a surface of a silicon-based negative electrode active material, similarly to addition to a negative electrode paste, an ionic compound is present in the proximity of a negative electrode active material. Accordingly, at an addition amount less than that when adding to an electrolyte solution, an effect can be exerted. Preferably, an addition amount with respect to the silicon-based negative electrode active material is 0.05 to 10% by mass and more preferably 0.1 to 1% by mass.

Further, when the ionic compound is coated on a surface of a silicon-based negative electrode active material like in this addition method, since a drying step is undergone the same as the (b), a nonaqueous electrolyte secondary battery may not be prepared under an environment where a moisture content is rigorously controlled.

### [Nonaqueous Electrolyte Secondary Battery]

When at least one of modes of addition of an ionic compound of the (a) to (c) is selected, and a positive electrode, a negative electrode prepared with a negative electrode paste that contains a silicon-based negative electrode active material, and a nonaqueous electrolyte solution are combined according to a known method, a nonaqueous electrolyte secondary battery of which recovery characteristic is improved can be obtained.

Here, as a positive electrode and a nonaqueous electrolyte solution, any of what has been used can be used. For example, what use oxides and chalcogen compounds of transition metals such as LiCoO₂, LiNiO₂, LiMn₂O₄, V₂O₅, MnO₂, TiS₂ and MoS₂ as a positive electrode active material can be cited. Further, as an electrolyte of a nonaqueous electrolyte solution, for example, what contains a lithium salt such as lithium perchlorate is used, and, as a nonaqueous solvent, propylene carbonate, ethylene carbonate, dimethoxyethane, γ-butyrolactone, and 2-methyltetrahydrofuran can be used singularly or in a combination of at least two kinds or more thereof.

### [Examples]

Hereinafter, with reference to examples and comparative examples of a nonaqueous electrolyte secondary battery of the invention, the present invention will be more detailed. However, the present invention is not restricted thereto.

### [Reference Example 1] (not according to the invention)

### <Preparation of Silicon-based Negative Electrode Active Material>

Firstly, 100 g of silicon oxide SiOx (x = 1.01) having an average particle size of 5 µm and the BET specific surface area of 3.5 m²/g was charged into a batch heating furnace. While depressurizing the inside of a furnace with an oil rotary vacuum pump, the inside of the furnace was heated to 1, 100°C, after reaching 1, 100°C, a CH₄ gas was flowed in at 0.3 NL/min and carbon coating was conducted for 5 hr. The degree of decompression at this time was 800 Pa. After the treatment, the temperature was lowered, and 97.5 g of black particles obtained by coating particles where Si is dispersed in SiO₂ with carbon was obtained. The resulted black particles were conductive particles having an average particle size of 5.2 µm, the BET specific surface area of 6.5 m²/g, and a carbon coating quantity of 5.1% by mass with respect to the black particles.

### <Preparation of Nonaqueous Electrolyte Solution>

As a nonaqueous electrolyte solution, a solution in which LiPF₆ was dissolved in a mixed solution of ethylene carbonate: diethyl carbonate = 1:1 (by volume ratio) so as to be 1.0 mol/L was prepared (hereinafter referred to as an electrolyte solution A). Next, a solution was prepared by dissolving LiBOB in a mixed solution of ethylene carbonate: diethyl carbonate = 1:1 (by volume ratio) so as to be 1.0 mol/L (hereinafter referred to as an electrolyte solution B). Prepared two kinds of electrolyte solutions were mixed at a ratio of A:B = 9:1 (by volume ratio) to prepare an electrolyte solution that is used in charge/discharge test. In order to prevent moisture in air from diffusing in an electrolyte solution, an operation of preparing the electrolyte solution was conducted in a glove box filled with an argon gas.

### <Preparation of Electrode>

Next, 85.0 parts by mass of prepared silicon-based negative electrode active material and 15.0 parts by mass of polyimide resin (in terms of solid content, trade name: U-Varnish, manufactured by Ube Industries, Ltd.) were mixed. Thereto, N-methyl-2-pyrrolidone was added to prepare a negative electrode paste. The paste was coated on one side of an electrolytic copper foil having a width of 200 mm and a thickness of 11 µm by using a doctor blade (coating width: 100 mm, coating thickness: 60 µm) and vacuum dried at 85°C for 30 min. Thereafter, an electrode was pressure molded by a roller press, vacuum dried at 400°C for 2 hr, punched into a disc having a diameter of 15.858 mm, and thereby a negative electrode was formed.

Further, 94.0 parts by mass of lithium cobalt oxide, 3.0 parts by mass of acetylene black, and 3.0 parts by mass of polyvinylidene fluoride were mixed, and thereto N-methyl-2-pyrrolidone was added to form a paste. The paste was coated on an aluminum foil having a thickness of 16 µm, after drying at 85°C for 1 hr, an electrode was pressure molded by using a roller press, after drying at 130°C for 5 hr, punched into a disc having a diameter of 15.858 mm, and a positive electrode was formed.

With the prepared negative electrode and positive electrode, the prepared nonaqueous electrolyte solution, and a separator of a polypropylene microporous film with a thickness of 20 µm, a coin lithium ion secondary battery for evaluation was prepared.

<Charge/Discharge Test>

The prepared coin lithium ion secondary battery was, after leaving at room temperature for two days, subjected to the charge/discharge test in a thermostat-dryer at 25°C by using a secondary battery charge/discharge test apparatus (manufactured by Aska Electronic Co., Ltd.). Until a voltage of a coin cell reached 4.2 V, charge was conducted under a constant current equivalent to 0.5 CmA, when a cell voltage reached 4.2 V, while maintaining the voltage, charge was conducted while decreasing a current, and at a point where a current value became lower than 0.1 CmA equivalent, charge was stopped. The discharge was conducted under a constant current equivalent to 0.5 CmA and stopped at a point where the cell voltage reached 2.5 V.

After repeating the charge/discharge test 20 times, once more, charge was conducted under a constant current equivalent to 0.5 CmA until a voltage of the coin cell reached 4.2 V, when the cell voltage reached 4.2 V, while maintaining the voltage, a current was decreased to conduct charge, and at a point when a current value became lower than 0.1 CmA, the charge was stopped.

After the cell that was in a charged state was left in a thermostat dryer at 60°C for one week, the cell was transferred to a thermostat dryer set at 25°C, and the discharge of the cell was conducted. The discharge was conducted at a constant current equivalent to 0.5 CmA and, at a point where the cell voltage reached 2.5 V, the discharge was stopped.

Thereafter, the cell in a discharged state was subjected to a cycle test after high temperature standing. Until the voltage reached 4.2 V, charge was conducted under a constant current equivalent to 0.5 CmA, when the cell voltage reached 4.2 V, while maintaining the voltage, charge was conducted by decreasing a current, and when a current value became lower than 0.1 CmA, the charge was stopped. The discharge was conducted under a constant current equivalent to 0.5 CmA, and at a point where the cell voltage reached 2.5 V, the discharge was stopped.

The above-mentioned charge/discharge test was repeated 5 times. The recovery characteristic (%) between before and after high temperature standing were obtained as a charge capacity at the 22nd cycle/charge capacity at the 20th cycle, and an average value of 5 times was taken as the recovery characteristic (%). The result thereof is shown in Table 1.

### [Reference Example 2]

Under the condition the same as that of Example 1 except that prepared two kinds of electrolyte solutions were mixed at a ratio of A:B = 8:2 (volume ratio) to prepare an electrolyte solution being used for charge/discharge test, a negative electrode and a nonaqueous electrolyte secondary battery were prepared, and the charge/discharge test was conducted. The recovery characteristic between before and after high temperature standing (%) is shown in Table 1.

### [Reference Example 3]

Under the condition the same as that of Example 1 except that prepared two kinds of electrolyte solutions were mixed at a ratio of A:B = 7:3 (volume ratio) to prepare an electrolyte solution being used for charge/discharge test, a negative electrode and a nonaqueous electrolyte secondary battery were prepared, and the charge/discharge test was conducted. The recovery characteristic between before and after high temperature standing (%) is shown in Table 1.

### [Reference Example 4]

Under the condition the same as that of Example 1 except that prepared two kinds of electrolyte solutions were mixed at a ratio of A:B = 5:5 (volume ratio) to prepare an electrolyte solution being used for charge/discharge test, a negative electrode and a nonaqueous electrolyte secondary battery were prepared, and the charge/discharge test was conducted. The recovery characteristic between before and after high temperature standing (%) is shown in Table 1.

### [Reference Example 5]

Under the condition the same as that of Example 1 except that prepared two kinds of electrolyte solutions were mixed at a ratio of A:B = 2:8 (volume ratio) to prepare an electrolyte solution being used for charge/discharge test, a negative electrode and a nonaqueous electrolyte secondary battery were prepared and the charge/discharge test was conducted. The recovery characteristic between before and after high temperature standing (%) is shown in Table 1.

### [Reference Example 6]

Under the condition the same as that of Example 1 except that among prepared two kinds of electrolyte solutions, only B was used as an electrolyte solution, a negative electrode and a nonaqueous electrolyte secondary battery were prepared, and the charge/discharge test was conducted. The recovery characteristic between before and after high temperature standing (%) is shown in Table 1.

**[Table 1] (Not according to the invention)**

| | | Reference Example 1 | Reference Example 2 | Reference Example 3 | Reference Example 4 | Reference Example 5 | Reference Example 6 |
|---|---|---|---|---|---|---|---|
| Electrode (parts by mass) | Silicon-based negative electrode active material | 85 | 85 | 85 | 85 | 85 | 85 |
| | Polyimide resin (solid content) | 15 | 15 | 15 | 15 | 15 | 15 |
| Electrolyte solution (volume ratio) | 1.0M LiPF6 in EC/DEC=1/1 (A) | 90 | 80 | 70 | 50 | 20 | |
| | 1.0M LiBOB in EC/DEC=1/1 (B) | 10 | 20 | 30 | 50 | 80 | 100 |
| Addition quantity of ionic compound (1) with respect to nonaqueous electrolyte (% by weight) | | 1.6 | 3.1 | 4.7 | 7.8 | 12.5 | 15.6 |
| Recovery characteristic (%) | | 85 | 88 | 89 | 86 | 83 | 81 |

| | | | | | | | |
|---|---|---|---|---|---|---|---|
| * Hereinafter, EC and DEC in table respectively represent ethylene carbonate and diethyl carbonate. | | | | | | | |

### [Example 7]

Under the condition the same as that of Example 1 except that 0.5% by mass of ethyl-methyl-imidazolium bis(oxalato)-borate (EMIm-BOB) was added with respect to an electrolyte solution A to prepare an electrolyte solution and only the electrolyte solution was used, a negative electrode and a nonaqueous electrolyte secondary battery were prepared, and the charge/discharge test was conducted. The recovery characteristic (%) between before and after high temperature standing is shown in Table 2.

### [Example 8]

Under the condition the same as that of Example 1 except that 5% by mass of EMIm-BOB was added with respect to an electrolyte solution A to prepare an electrolyte solution and only the electrolyte solution was used, a negative electrode and a nonaqueous electrolyte secondary battery were prepared, and the charge/discharge test was conducted. The recovery characteristic (%) between before and after high temperature standing is shown in Table 2.

### [Example 9]

Under the condition the same as that of Example 1 except that 20% by mass of EMIm-BOB was added with respect to an electrolyte solution A to prepare an electrolyte solution and only the electrolyte solution was used, a negative electrode and a nonaqueous electrolyte secondary battery were prepared, and the charge/discharge test was conducted. The recovery characteristic (%) between before and after high temperature standing is shown in Table 2.

**[Table 2]**

| | | Example 7 | Example 8 | Example 9 |
|---|---|---|---|---|
| Electrode (parts by mass) | Silicon-based negative electrode active material | 85 | 85 | 85 |
| | Polyimide resin (solid content) | 15 | 15 | 15 |
| Electrolyte solution (volume ratio) | 1.0M LiPF6 in EC/DEC=1/1 (A) | 99.5 | 95 | 80 |
| | EMIm-BOB | 0.5 | 5 | 20 |
| Addition quantity of ionic compound (1) with respect to nonaqueous electrolyte (% by weight) | | 0.5 | 5.0 | 20.0 |
| Recovery characteristic (%) | | 80 | 83 | 79 |

### [Example 10]

Under the condition the same as that of Example 1 except that, to a negative electrode paste, 0.05% by mass of EMIm-BOB was added with respect to a silicon-based negative electrode active material to prepare a negative electrode and further only an electrolyte solution A was used, a negative electrode and a nonaqueous electrolyte secondary battery were prepared and charge/discharge test was conducted. The recovery characteristic (%) between before and after high temperature standing is shown in Table 3.

### [Example 11]

Under the condition the same as that of Example 1 except that, to a negative electrode paste, 10% by mass of EMIm-BOB was added with respect to a silicon-based negative electrode active material to prepare a negative electrode and further only an electrolyte solution A was used, a negative electrode and a nonaqueous electrolyte secondary battery were prepared and charge/discharge test was conducted. The recovery characteristic (%) between before and after high temperature standing is shown in Table 3.

**[Table 3]**

| | | Example 10 | Example 11 |
|---|---|---|---|
| Electrode (parts by mass) | Silicon-based negative electrode active material | 85 | 85 |
| | Polyimide resin (solid content) | 15 | 15 |
| | Addition quantity of EMIm-BOB with respect to paste | 0.0425 | 8.5 |
| Electrolyte solution (volume ratio) | 1.0M LiPF6 in EC/DEC=1/1 (A) | 100 | 100 |
| Addition quantity of ionic compound (1) with respect to active material | | 0.05 | 10 |
| Recovery characteristic (%) | | 85 | 80 |

### [Example 12]

With respect to 5 ml of NMP, 0.05 g of EMIm-BOB was dissolved. Thereafter, the solution was diluted with 10 ml of isopropyl alcohol, 10 g of the silicon-based negative electrode active material prepared in Example 1 was poured into the solution and stirred to prepare a slurry. The slurry was vacuum dried at 150°C to completely dry a solvent, thereby EMIm-BOB was coated on a surface of the silicon-based negative electrode active material. When flocculation was caused, the flocculation was disintegrated by using a mortar machine, etc. and a silicon-based negative electrode active material was prepared. Under the condition the same as that of Example 1 except that the silicon-based negative electrode active material was used and only an electrolyte solution A was used, a negative electrode and a nonaqueous electrolyte secondary battery were prepared, and charge/discharge test was conducted. The recovery characteristic (%) between before and after high temperature standing is shown in Table 4.

### [Example 13]

With respect to 5 ml of NMP, 1.0 g of EMIm-BOB was dissolved. Thereafter, the solution was diluted with 10 ml of isopropyl alcohol, 10 g of the silicon-based negative electrode active material prepared in Example 1 was poured into the solution and stirred to prepare a slurry. The slurry was vacuum dried at 150°C to completely dry a solvent, thereby EMIm-BOB was coated on a surface of the silicon-based negative electrode active material. When flocculation was caused, the flocculation was disintegrated by using a mortar machine, etc. and a silicon-based negative electrode active material was prepared. Under the condition the same as that of Example 1 except that the silicon-based negative electrode active material was used and only an electrolyte solution A was used, a negative electrode and a nonaqueous electrolyte secondary battery were prepared, and charge/discharge test was conducted. The recovery characteristic (%) between before and after high temperature standing is shown in Table 4.

**[Table 4]**

| | | Example 12 | Example 13 |
|---|---|---|---|
| Electrode (parts by mass) | Silicon-based negative electrode active material | 85 | 85 |
| | EMIm-BOB quantity applied to active material | 0.0425 | 8.5 |
| | Polyimide resin (solid content) | 15 | 15 |
| Electrolyte solution (volume ratio) | 1.0M LiPF6 in EC/DEC=1/1 (A) | 100 | 100 |
| Quantity of ionic compound (1) with respect to active material (% by weight) | | 0.05 | 10 |
| Recovery characteristic (%) | | 86 | 79 |

### [Comparative Example 1]

Under the condition the same as that of Example 1 except that among two kinds of prepared electrolyte solutions, only A was used, a negative electrode and a nonaqueous electrolyte secondary battery were prepared, and charge/discharge test was conducted. The recovery characteristic (%) between before and after high temperature standing is shown in Table 5.

### [Comparative Example 2]

As a nonaqueous electrolyte solution, a solution was prepared by dissolving LiTFSI (lithium bis(trifluoromethanesulfonyl)imide) in a mixed solution of ethylene carbonate: diethyl carbonate = 1:1 (volume ratio) so as to be 1.0 mol/L (hereinafter referred to as electrolyte solution C). Under the condition the same as that of Example 1 except that a mixing ratio of A:C = 8:2 (volume ratio) was adopted and an electrolyte solution being used in charge/discharge test was prepared, a negative electrode and a nonaqueous electrolyte secondary battery were prepared, and charge/discharge test was conducted. The recovery characteristic (%) between before and after high temperature standing is shown in Table 5.

### [Comparative Example 3]

As a nonaqueous electrolyte solution, a solution was prepared by dissolving LiBETI (lithium bis(pentafluoroethanesulfonyl)imide) in a mixed solution of ethylene carbonate: diethyl carbonate = 1:1 (volume ratio) so as to be 1.0 mol/L (hereinafter referred to as electrolyte solution D). Under the condition the same as that of Example 1 except that by mixing at a ratio of A:D = 8:2 (volume ratio), an electrolyte solution being used in charge/discharge test was prepared, a negative electrode and a nonaqueous electrolyte secondary battery were prepared and charge/discharge test was conducted. The recovery characteristic (%) between before and after high temperature standing is shown in Table 5.

### [Comparative Example 4]

As a nonaqueous electrolyte solution, a solution was prepared by dissolving LiBF₄ in a mixed solution of ethylene carbonate: diethyl carbonate = 1:1 (volume ratio) so as to be 1.0 mol/L (hereinafter referred to as electrolyte solution E). Under the condition the same as that of Example 1 except that by mixing at a ratio of A:E = 8:2 (volume ratio), an electrolyte solution being used in charge/discharge test was prepared, a negative electrode and a nonaqueous electrolyte secondary battery were prepared, and charge/discharge test was conducted. The recovery characteristic (%) between before and after high temperature standing is shown in Table 5.

### [Comparative Example 5]

As a nonaqueous electrolyte solution, a solution was prepared by dissolving LiFAP (lithium tris(pentafluoroethyl)trifluorophosphate) in a mixed solution of ethylene carbonate: diethyl carbonate = 1:1 (volume ratio) so as to be 1.0 mol/L (hereinafter referred to as electrolyte solution F). Under the condition the same as that of Example 1 except that by mixing at a ratio of A:F = 8:2 (volume ratio), an electrolyte solution being used in charge/discharge test was prepared, a negative electrode and a nonaqueous electrolyte secondary battery were prepared, and charge/discharge test was conducted. The recovery characteristic (%) between before and after high temperature standing is shown in Table 5.

**[Table 5]**

| | | Comparative Example 1 | Comparative Example 2 | Comparative Example 3 | Comparative Example 4 | Comparative Example 5 |
|---|---|---|---|---|---|---|
| Electrode (parts by mass) | Silicon-based negative electrode active material | 85 | 85 | 85 | 85 | 85 |
| | Polyimide resin (solid content) | 15 | 15 | 15 | 15 | 15 |
| Electrolyte solution (volume ratio) | 1.0M LiPF6 in EC/DEC =1/1 (A) | 100 | 80 | 80 | 80 | 80 |
| | 1.0M LiTFSI in EC/DEC =1/1 (C) | | 20 | | | |
| | 1.0M LiBETI in EC/DEC =1/1 (D) | | | 20 | | |
| | 1.0M LiBF4 in EC/DEC =1/1 (E) | | | | 20 | |
| | 1.0M LiFAP in EC/DEC =1/1 (F) | | | | | 20 |
| Addition quantity of ionic compound with respect to nonaqueous electrolyte (% by weight) | | 0 | 0 | 0 | 0 | 0 |
| Recovery characteristic (%) | | 77 | 76 | 77 | 77 | 74 |

As was illustrated in Tables 1 to 5, it was found that, when an ionic compound is added inside a battery cell, the recovery characteristic higher than that when LiTFSI, LiBETI, LiBF₄, and LiFAP that are generally said high in the heat resistance are used can be developed.

The present invention is not restricted to the above-described embodiments. The embodiments are illustration, and all that has substantially the same constitution with technical ideas described in Claims of the invention and has the same advantages is contained in the technical range of the invention.

## Claims

1. A nonaqueous electrolyte secondary battery comprising inside a battery cell:
a positive electrode;
a negative electrode prepared by using a negative electrode paste containing a silicon-based negative electrode active material; and
a nonaqueous electrolyte solution,
wherein an ionic compound represented by the following general formula (1) is contained inside the battery cell, 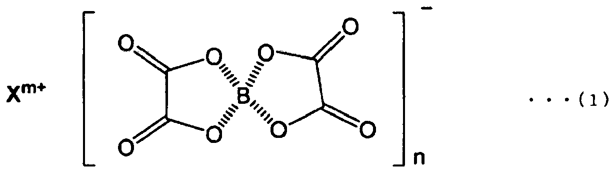 wherein X^{m+} represents an organic cation having N⁺, P⁺ or S⁺, or an alkaline earth metal cation, m represents a valence of the X, and n represents a natural number satisfying n = m.

2. The nonaqueous electrolyte secondary battery according to Claim 1, wherein the ionic compound is added to the nonaqueous electrolyte solution and/or the negative electrode paste.

3. The nonaqueous electrolyte secondary battery according to Claim 1 or 2, wherein the ionic compound is added, to the nonaqueous electrolyte solution, from 0.5 to 20% by mass and/or, to the negative electrode paste, from 0.05 to 10% by mass with respect to the silicon-based negative electrode active material.

4. The nonaqueous electrolyte secondary battery according to any one of Claims 1 to 3, wherein the ionic compound is coated on a surface of the silicon-based negative electrode active material.

## Patentansprüche

1. Sekundärbatterie mit nicht-wässrigem Elektrolyt, umfassend im Inneren einer Batteriezelle:
eine positive Elektrode;
eine negative Elektrode, die hergestellt ist unter Verwendung einer negativen Elektrodenpaste, die ein negatives aktives Elektrodenmaterial auf Silicium-Basis enthält; und
eine nicht-wässrige Elektrolytlösung,
wobei eine ionische Verbindung, die durch die folgende allgemeine Formel (1) dargestellt wird, innerhalb der Batteriezelle enthalten ist, 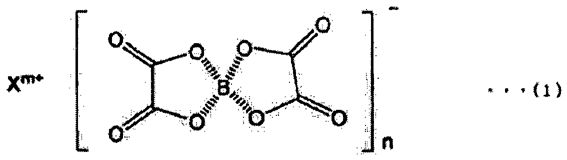 in der X^{m+} ein organisches Kation mit N⁺, P⁺ oder S⁺ oder ein Erdalkalimetall-Kation darstellt, m eine Valenz des X darstellt und n eine natürliche Zahl darstellt, die n = m genügt.

2. Sekundärbatterie mit nicht-wässrigem Elektrolyt nach Anspruch 1, bei der die ionische Verbindung der nicht-wässrigen Elektrolytlösung und/oder der negativen Elektrodenpaste zugesetzt ist.

3. Sekundärbatterie mit nicht-wässrigem Elektrolyt nach Anspruch 1 oder 2, bei der die ionische Verbindung der nicht-wässrigen Elektrolytlösung zu 0,5 bis 20 Masse-% und/oder der negativen Elektrodenpaste zu 0,05 bis 10 Masse-%, bezogen auf das negative aktive Elektrodenmaterial auf Silicium-Basis, zugesetzt ist.

4. Sekundärbatterie mit nicht-wässrigem Elektrolyt nach irgendeinem der Ansprüche 1 bis 3, bei der die ionische Verbindung auf einer Oberfläche des negativen aktiven Elektrodenmaterials auf Silicium-Basis aufgebracht ist.

## Revendications

1. Batterie secondaire à électrolyte non aqueux comprenant à l'intérieur d'un élément de batterie :
une électrode positive ;
une électrode négative préparée en utilisant une pâte pour électrode négative contenant un matériau actif d'électrode négative à base de silicium ; et
une solution d'électrolyte non aqueux,
dans laquelle un composé ionique représenté par la formule générale (1) suivante est contenu à l'intérieur de l'élément de batterie, 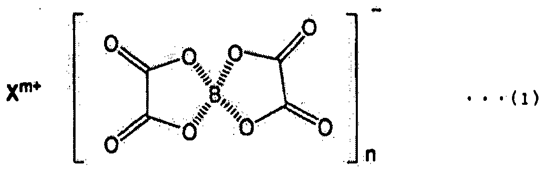
dans laquelle X^{m+} représente un cation organique ayant N⁺, P⁺ ou S⁺, ou un cation de métal alcalinoterreux, m représente une valence du X, et n représente un nombre naturel satisfaisant à n = m.

2. Batterie secondaire à électrolyte non aqueux selon la revendication 1, dans laquelle le composé ionique est ajouté à la solution d'électrolyte non aqueux et/ou à la pâte pour électrode négative.

3. Batterie secondaire à électrolyte non aqueux selon la revendication 1 ou 2, dans laquelle le composé ionique est ajouté, à la solution d'électrolyte non aqueux, de 0,5 à 20 % en masse et/ou, à la pâte pour électrode négative, de 0,05 à 10 % en masse par rapport au matériau actif d'électrode négative à base de silicium.

4. Batterie secondaire à électrolyte non aqueux selon l'une quelconque des revendications 1 à 3, dans laquelle le composé ionique est enduit sur une surface du matériau actif d'électrode négative à base de silicium.
